# EUROPÄISCHE PATENTSCHRIFT

(11) **EP 1 404 012 B1**
(45) Veröffentlichungstag und Bekanntmachung des Hinweises auf die Patenterteilung: **17.04.2013**
(21) Anmeldenummer: 03017997.2
(22) Anmeldetag: 07.08.2003
(51) Int. Cl.: H02K 41/03, H02K 3/47

(54) **Spulensystem mit zugehörigem Herstellungsverfahren und damit ausgestattetem elektrodynamischem Lineardirektantrieb**
Coil system, its manufacturing method, and electrodynamic linear motor incorporating the same
Système de bobines, son procédé de fabrication, et moteur linéaire électrodynamique équipé dudit système

(30) Priorität: 24.09.2002 DE 10244261
(43) Veröffentlichungstag der Anmeldung: 31.03.2004
(73) Patentinhaber: FESTO AG & Co. KG, 73734 Esslingen (DE)
(72) Erfinder: Finkbeiner, Matthias, 71159 Mötzingen (DE)
(74) Vertreter: Abel, Martin

(56) Entgegenhaltungen:
- WO-A-99/18652
- DE-A1- 2 349 139
- DE-A1- 19 709 044
- JP-A- 59 165 952
- JP-A- 2000 228 858
- JP-A- 2001 078 420
- US-A- 6 064 128

## Beschreibung

Die Erfindung betrifft ein insbesondere für einen elektrodynamischen Lineardirektantrieb vorgesehenes Spulensystem, das eine Spulenanordnung enthält, die aus mehreren koaxial aufeinanderfolgend angeordneten Spulen und aus einem längs der Spulenanordnung verlaufenden Platinenstreifen besteht, der eine elektrische Schaltung mit vorgegebenen Kontaktierungsstellen aufweist, mit denen die Drahtenden jeder Einzelspule unter gleichzeitiger mechanischer Fixierung am Platinenstreifen kontaktiert sind. Ferner betrifft die Erfindung ein zur Herstellung eines solchen Spulensystems geeignetes Verfahren. Schließlich betrifft die Erfindung einen mit einem solchen Spulensystem ausgestatteten elektrodynamischen Lineardirektantrieb.

Elektrodynamische Lineardirektantriebe, in der Regel als Linearmotoren bezeichnet, verfügen über ein getaktet mit einer Erregerspannung beaufschlagbares Spulensystem und ein oder mehrere axial aufeinanderfolgend angeordnete Permanentmagnete enthaltendes Magnetsystem. Eines dieser Systeme ist Bestandteil eines Stators, das andere System ist Bestandteil eines relativ zu dem Stator beweglichen Abtriebsteiles. Durch Erregung des Spulensystems kann eine lineare Relativbewegung zwischen dem Abtriebsteil und dem Stator hervorgerufen werden.

Aus der US 6,064,128 A ist ein Spulensystem der eingangs erwähnten Art bekannt, das eine Spulenanordnung besitzt, die aus mehreren koaxial aufeinander folgend angeordneten Einzelspulen besteht, wobei die Einzelspulen in Spulengruppen zu jeweils drei Einzelspulen angeordnet sind. Längs der Spulenanordnung verläuft eine Platine, die eine elektrische Schaltung mit vorgegebenen Kontaktierungsstellen aufweist. Die Drahtenden jeder Einzelspule sind unter gleichzeitiger mechanischer Fixierung an der Platine kontaktiert.

Die DE 2 349 139 offenbart einen translatorischen elektrischen Schrittmotor, der ein Gehäuse umfasst, in dem hintereinander angeordnet mehrere Statorsysteme integriert sind, die jeweils aus Ringspulen, Rückschlussringen und Polscheiben bestehen. Ferner ist ein axial verschiebbarer Läufer vorgesehen, der von den Statorsystemen umschlossen ist.

Die DE 197 09 044 beschreibt einen Linearmotor mit beweglichem Magnetläufer, der ein zylindrisches erstes Statorelement, ein zylinderringförmiges zweites Statorelement, eine zylinderförmige Statorspule und einen im Wesentlichen zylinderringförmigen Permanentmagnet-Läufer umfasst.

Die US 6,622,369 B1 beschreibt ein Verfahren zur Herstellung eines aus mehreren Einzelspulen bestehenden Linearmotors, wobei die Spulen auf einen blockartigen Spulenträger montiert werden, die Spulen elektrisch miteinander kontaktiert werden und die dadurch entstehende Spulenanordnung mit einem Rahmen eingehaust wird. Ferner wird Epoxidharz zur Fixierung der Spulen verwendet.

Bei einem aus der US 4 460 855 bekannten Linearantrieb sind die einzelnen Spulen der Spulenanordnung gruppenweise zusammengefasst, wobei sie innerhalb der einzelnen Spulengruppen von einer durchgängigen Wicklung gebildet sind. Die Herstellung dieser durchgängigen Wicklung ist relativ aufwendig.

In der DE 197 09 044 A1 wird ein Linearmotor beschrieben, dessen Statorspule aus hintereinander geschalteten Einzelspulen besteht. Für die Kommutierung sind Leiterschleifen herausgeführt und mit einer Steuerschaltung verbunden. Nähere Angaben über die praktische Realisierung eines solchen Aufbaus enthält die DE 197 09 044 A1 jedoch nicht.

Es ist die Aufgabe der vorliegenden Erfindung, ein eine hohe Leistungs- bzw. Energiedichte ermöglichendes Spulensystem zu schaffen, das sich einfach herstellen lässt. Ferner soll ein mit einem solchen Spulensystem ausgestatteter elektrodynamischer Lineardirektantrieb vorgeschlagen werden. Außerdem soll ein zur Herstellung eines Spulensystems besonders geeignetes Verfahren vorgeschlagen werden.

Gelöst wird diese Aufgabe mit einem Spulensystem mit den Merkmalen des unabhängigen Anspruches 1. Das erfindungsgemäße Spulensystem zeichnet sich dadurch aus, dass ein zu der Spulenanordnung koaxiales Rückschlussteil vorgesehen ist, das eine längs verlaufende Aussparung aufweist, in der sich der Platinenstreifen erstreckt.

Die Aufgabe wird überdies durch ein Herstellungsverfahren gelöst, bei dem vorgefertigte Einzelspulen mit ihren beiden Drahtenden unter gleichzeitiger Kontaktierung an einem eine elektrische Schaltung aufweisenden Platinenstreifen so fixiert werden, dass sich der Platinenstreifen längs der Spulenanordnung erstreckt, wobei die nach dem Fixieren aus den Einzelspulen und den Platinenstreifen entstandene Baueinheit in ein zu der Spulenanordnung koaxiales Rückschlussteil mit längs verlaufender Aussparung eingesteckt wird, wobei sich der Platinenstreifen in der Aussparung erstreckt.

Die Erfindung wird ferner gelöst durch einen elektrodynamischen Lineardirektantrieb, mit den Merkmalen des Anspruches 13.

Bei dem erfindungsgemäßen Spulensystem kann die gewünschte Verschaltung der Einzelspulen vor deren Installation durch Realisierung entsprechender Leiterzüge in jeder beliebigen Gestalt auf dem Platinenstreifen realisiert werden. Anschließend sind die Einzelspulen lediglich noch mit ihren Drahtenden an den vorgegebenen Kontaktierungsstellen der Schaltung zu kontaktieren, wobei gleichzeitig die Fixierung am Platinenstreifen erfolgt. Dadurch ergibt sich eine Baueinheit, innerhalb der die Einzelspulen unter koaxialer Anordnung an dem der Spulenanordnung entlang laufenden Platinenstreifen befestigt und zugleich kontaktiert sind. Diese Baueinheit kann anschließend sehr einfach am Einsatzort installiert werden, beispielsweise zur Bildung eines elektrodynamischen Lineardirektantriebes.

Da zur Realisierung der Anordnung kein Wickelkörper erforderlich ist, auf den die Einzelspulen aufgewickelt werden, können die Einzelspulen sehr nahe nebeneinander liegen und sich sogar berühren. Auf diese Weise sind die Luftspalte auf ein Minimum reduziert und kann eine hohe Leistungs- bzw. Energiedichte erzielt werden.

Die Anordnung aus Platinenstreifen und daran fixierten Einzelspulen kann eine selbsttragende Baueinheit darstellen.

Bevorzugt handelt es sich bei den Einzelspulen um identisch aufgebaute Spulen. Dadurch kann auf Basis standardisierter Einzelteile eine sehr kostengünstige Herstellung erfolgen. Bei den Einzelspulen handelt es sich zweckmäßigerweise um Backlackspulen.

An den Kontaktierungsstellen verfügt der Platinenstreifen zweckmäßigerweise über Kontaktierungslöcher. In der Längsrichtung des Platinenstreifens sind vorzugsweise aufeinanderfolgende Paare von Kontaktierungslöchern vorgesehen, die durch Leiterbahnen des Platinenstreifens in einem bestimmten Schaltungsmuster verschaltet sind und in die die Drahtenden der Einzelspulen eingesteckt und mit der Schaltung verlötet sind.

Die Schaltung kann so ausgebildet sein, dass die Einzelspulen zu mehreren Spulengruppen verschaltet sind. Beispielsweise können auf diese Weise zwei oder drei Spulengruppen definiert werden, wobei die Einzelspulen der einzelnen Spulengruppen abwechselnd aufeinanderfolgend angeordnet sind. Bei Beaufschlagung mit einer getakteten Erregerspannung wird ein wanderndes Magnetfeld erzeugt, das in Verbindung mit einem Linearantrieb zur Erzeugung der Antriebskraft herangezogen werden kann.

Der Platinenstreifen befindet sich zweckmäßigerweise am Außenumfang der Spulenanordnung, wobei er an diesem Außenumfang vorzugsweise unmittelbar anliegt.

Es ist ein zu der Spulenanordnung koaxiales Rückschlussteil vorgesehen, das eine längsverlaufende Aussparung aufweist, in der sich der Platinenstreifen erstreckt. Auf diese Weise kann das Rückschlussteil ohne Behinderung durch den Platinenstreifen in unmittelbarer Nähe der Spulenanordnung platziert werden. Bei dem Rückschlussteil handelt es sich beispielsweise um ein die Spulenanordnung umschließendes Rohr, das zur Bildung der Aussparung längs geschlitzt ist.

Um der Anordnung eines gewisse Stabilität zu verleihen, sind die Zwischenräume zwischen dem Rückschlussteil, den Einzelspulen und dem Platinenstreifen zweckmäßigerweise mit einer der Einzelspulen eingesteckt und mit der Schaltung verlötet sind.

Die Schaltung kann so ausgebildet sein, dass die Einzelspulen zu mehreren Spulengruppen verschaltet sind. Beispielsweise können auf diese Weise zwei oder drei Spulengruppen definiert werden, wobei die Einzelspulen der einzelnen Spulengruppen abwechselnd aufeinanderfolgend angeordnet sind. Bei Beaufschlagung mit einer getakteten Erregerspannung wird ein wanderndes Magnetfeld erzeugt, das in Verbindung mit einem Linearantrieb zur Erzeugung der Antriebskraft herangezogen werden kann.

Der Platinenstreifen befindet sich zweckmäßigerweise am Außenumfang der Spulenanordnung, wobei er an diesem Außenumfang vorzugsweise unmittelbar anliegt.

Bevorzugt ist ein zu der Spulenanordnung koaxiales Rückschlussteil vorgesehen, das eine längsverlaufende Aussparung aufweist, in der sich der Platinenstreifen erstreckt. Auf diese Weise kann das Rückschlussteil ohne Behinderung durch den Platinenstreifen in unmittelbarer Nähe der Spulenanordnung platziert werden. Bei dem Rückschlussteil handelt es sich beispielsweise um ein die Spulenanordnung umschließendes Rohr, das zur Bildung der Aussparung längs geschlitzt ist.

Um der Anordnung eines gewisse Stabilität zu verleihen, sind die Zwischenräume zwischen dem Rückschlussteil, den Einzelspulen und dem Platinenstreifen zweckmäßigerweise mit einer Gießmasse ausgefüllt. Die erwähnten Komponenten werden dadurch in ihrer Relativlage fixiert.

Zur Zentrierung können die Einzelspulen auf einem die Spulenanordnung durchsetzenden, elektrisch nicht leitenden Rohr sitzen. Bevorzugt wird ein Kunststoffrohr verwendet.

Nachfolgend wird die Erfindung anhand der beiliegenden Zeichnung näher erläutert. In dieser zeigen:
- Figur 1: eine bevorzugte Bauform eines elektrodynamischen Lineardirektantriebes, der mit einem nach dem erfindungsgemäßen Verfahren hergestellten und in erfindungsgemäßer Weise ausgebildeten Spulensystem ausgestattet ist,
- Figur 2: einen Längsschnitt durch den elektrodynamischen Lineardirektantrieb der Figur 1 unter Weglassung des bei der Bauform gemäß Figur 1 um die Spulenanordnung herum platzierten Schutzrohres,
- Figur 3: einen Querschnitt durch die Anordnung aus Figur 2 gemäß Schnittlinie III-III,
- Figur 4: das bei dem Linearantrieb der Figuren 1 bis 3 verwendete Spulensystem im Längsschnitt ohne Darstellung des Rückschlussteiles,
- Figur 5: die Anordnung aus Figur 4 in einer seitlichen Draufsicht mit Blickrichtung gemäß Pfeil V, und
- Figur 6: eine vergrößerte Teildarstellung des Spulensystems zur Verdeutlichung der Befestigungsweise der Einzelspulen an dem Platinenstreifen.

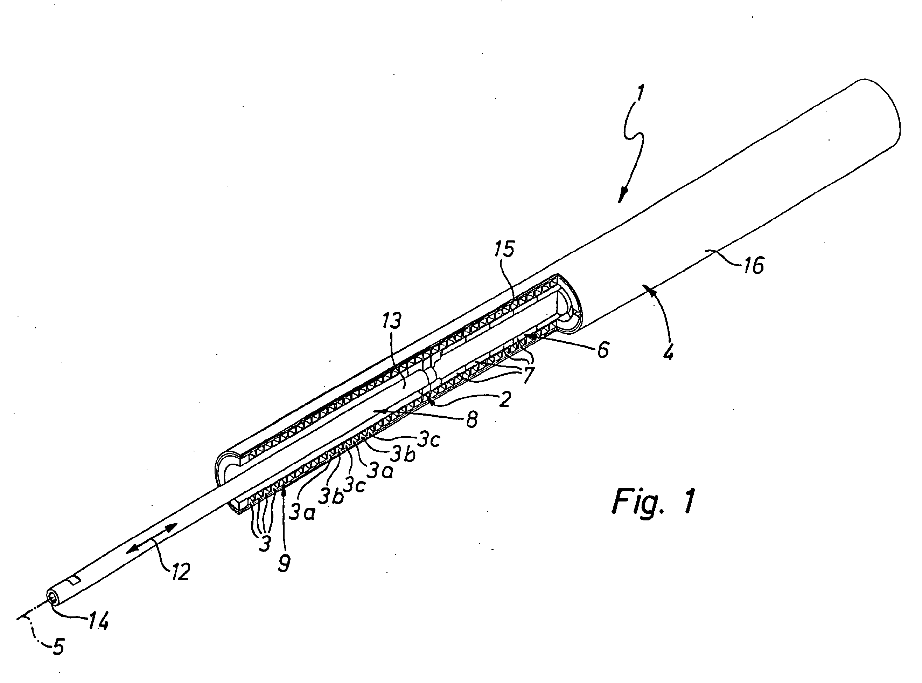

Die Figuren 1 bis 3 zeigen einen elektrodynamischen Lineardirektantrieb 1, der einen gehäuseartig ausgebildeten Stator 4 und ein relativ zu dem Stator 4 linear bewegliches Abtriebsteil 8 aufweist. Die Längsachse des Stators 4 ist bei 5 angedeutet. Die mit der Richtung der Längsachse 5 zusammenfallende mögliche Linearbewegung 12 des Abtriebsteiles 8 ist durch einen Doppelpfeil kenntlich gemacht.

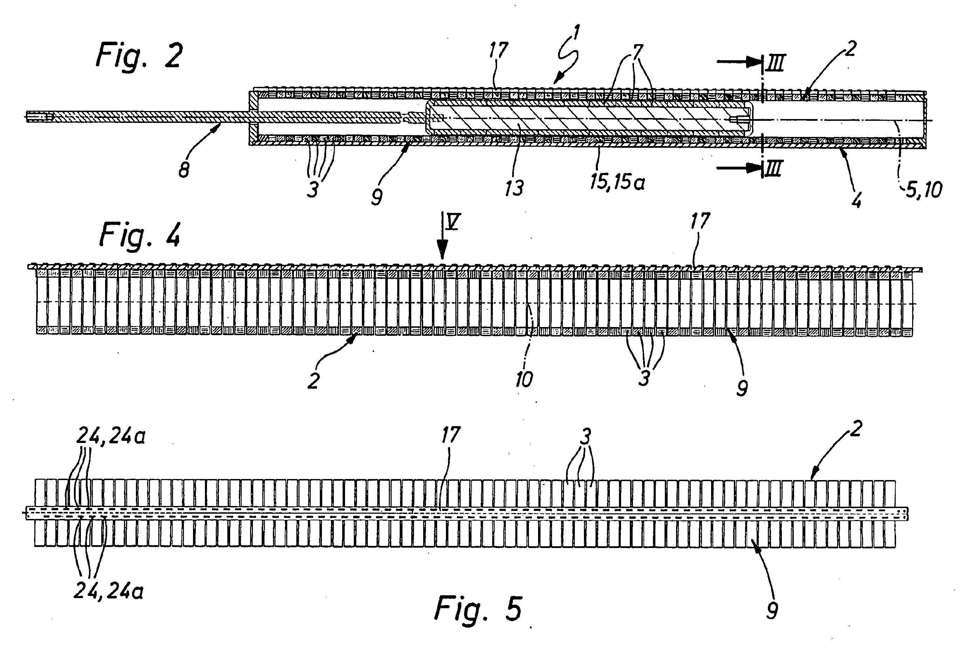

Der Stator 4 ist mit einem Spulensystem 2 ausgestattet, das über mehrere koaxial aufeinanderfolgend angeordnete Einzelspulen 3 verfügt. Die Gesamtheit der derart angeordneten Einzelspulen 3 sei als Spulenanordnung 9 bezeichnet. Deren Längsachse 10 fällt mit der Längsachse 5 des Stators 4 zweckmäßigerweise zusammen. Die Figuren 4 bis 6 verdeutlichen den Aufbau der Spulenanordnung 9 besonders.

In noch zu schildernder Weise sind die Einzelspulen 3 elektrisch zu mehreren Spulengruppen verschaltet. Beim Ausführungsbeispiel erfolgt eine Verschaltung zu drei Spulengruppen. Diese Spulengruppen könnte man auch als Spulenstränge bezeichnen. Innerhalb einer Spulengruppe befindliche Einzelspulen 3 sind in Reihe geschaltet.

Die Einzelspulen 3 der verschiedenen Spulengruppen sind so angeordnet, dass sich in der Richtung der Längsachse 10 eine abwechselnde Aufeinanderfolge ergibt. Auf eine Einzelspule 3a der einen Spulengruppe folgt eine Einzelspule 3b der zweiten Spulengruppe, auf die eine Einzelspule 3c der dritten Spulengruppe folgt. Diese Reihenfolge wiederholt sich. Man könnte die einzelnen Spulengruppen auch als Bestandteile von Spulenteilsystemen bezeichnen.

Mittels nicht näher dargestellter Ansteuerungsmittel kann das Spulensystem 2 mit einer getakteten Erregerspannung beaufschlagt werden, wobei die verschiedenen Spulengruppen in zeitlichem Abstand zueinander wiederkehrend elektrisch erregt werden. Auf diese Weise wird ein in Richtung der Längsachse 10 des Spulensystems 2 wanderndes Magnetfeld erzeugt.

Der Lineardirektantrieb 1 ist ferner mit einem permanentmagnetischen Magnetsystem 6 ausgestattet. Dieses enthält ein oder, gemäß dem Ausführungsbeispiel, mehrere axial aufeinanderfolgend angeordnete Permanentmagnete 7, die bevorzugt ringförmig ausgebildet sind. Zweckmäßigerweise liegt eine radiale Polarisierung der Permanentmagnete 7 vor, wobei unmittelbar benachbarte Permanentmagnete 7 einander entgegengesetzt gepolt sind.

Das Magnetsystem 6 befindet sich im Innenraum des Spulensystems 2 und wird von diesem koaxial umschlossen. Dabei ist es als Bestandteil des Abtriebsteiles 8 ausgeführt.

Abweichend von dieser Bauform eines Lineardirektantriebes wäre es auch möglich, das Magnetsystem am Außenumfang des Spulensystems anzuordnen. Auch könnten die Funktion von Stator 4 und Abtriebsteil 8 vertauscht sein.

Das Magnetsystem 6 ist an einem ein Rückschlußteil bildenden Magnetträger 13 befestigt, der beim Ausführungsbeispiel stangenförmig ausgebildet ist und an einer Stirnseite aus dem hohlzylindrischen Spulensystem 2 heraus ragt. Stirnseitig ist er mit Befestigungsmitteln 14 zur Befestigung eines zu bewegenden Gegenstandes versehen.

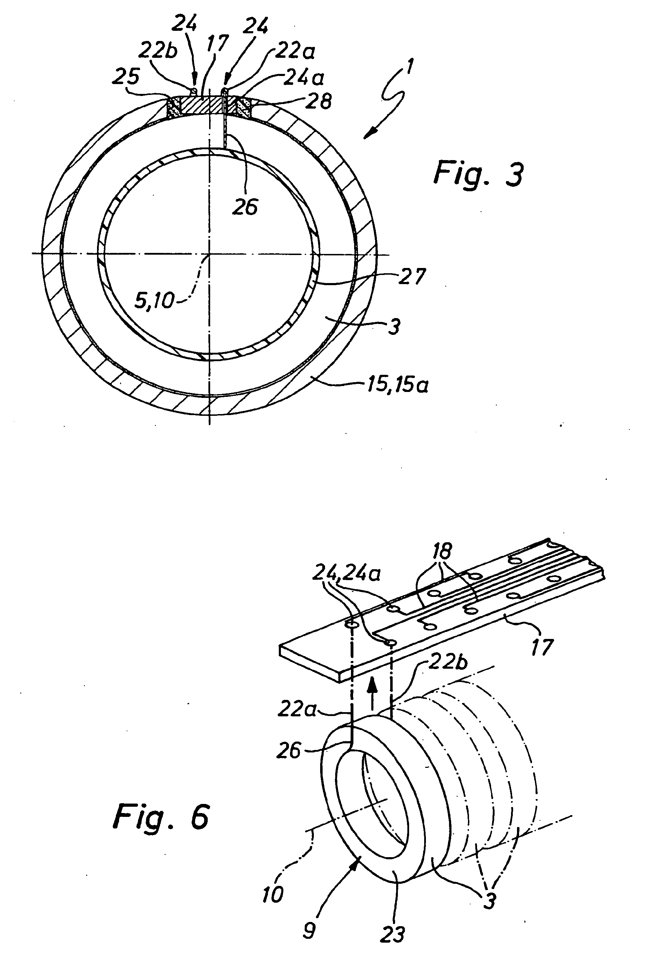

Das Spulensystem 2 ist mit einem aus Figuren 1 und 3 ersichtlichen Rückschlussteil 15 ausgestattet, das den magnetischen Rückschluss der Magnetfelder begünstigt. Es ist auf der dem Magnetsystem 6 radial entgegengesetzten Seite der Spulenanordnung 9 platziert und befindet sich beim Ausführungsbeispiel am Außenumfang derselben.

Bevorzugt ist das aus ferromagnetischem Material bestehende Rückschlussteil 15 von einem rohrförmigen Körper 15a gebildet, der die Spulenanordnung 9 koaxial umschließt. Das Rückschlussteil 15 und die Spulenanordnung 9 sind in der Längsrichtung relativ zueinander unbeweglich.

Das Rückschlussteil 15 kann, wie in Figur 1 abgebildet, von einem Hüllrohr 16 umgeben sein. Dieses stellt praktisch das Gehäuse des Lineardirektantriebes 1 dar. Es dient vor allem dem Schutz der enthaltenen elektrischen und elektronischen Komponenten. Bei Bedarf kann es auch zur Fixierung des Stators 4 verwendet werden.

Wird das Spulensystem 2 mit einer getakteten Erregerspannung beaufschlagt, kooperieren die elektromagnetischen Felder mit den permanentmagnetischen Feldern des Magnetsystems 6 und rufen die Linearbewegung 12 des Magnetsystems 6 und somit des mit diesem ausgestatteten Abtriebsteils 8 relativ zum Spulensystem 2 und dem mit diesem ausgestatteten Stator 4 hervor. Diese Linearbewegung lässt sich abgreifen, um beispielsweise einen Gegenstand zu bewegen. Einsatzmöglichkeiten ergeben sich unter anderem auf dem Sektor der Automatisierungstechnik im Zusammenhang mit Fertigungs- und Montageaufgaben.

Der Lineardirektantrieb ist in der Lage, hohe Stellkräfte auszuüben. Mit ein Grund hierfür liegt in der hohen Energiedichte des Spulensystems 2. Dies ist auf ein Minimum an Luftspalten zurückzuführen, unter anderem bedingt durch die Tatsache, dass axial beabstandete Einzelspulen 3 ohne oder mit nur marginalem Zwischenraum nebeneinander angeordnet sind. Während konventionelle Linearmotoren meist über ein Spulensystem verfügen, bei dem die Spulen auf einem gesonderten und meist aus Kunststoffmaterial bestehenden formstabilen Spulenträger gewickelt sind, wird bei dem vorliegenden Lineardirektantrieb auf einen solchen Spulenträger verzichtet. Dadurch entfällt auch die bei solchen Spulenträgern übliche Trennwand zwischen benachbarten Spulen.

Die Details des Spulensystems 2 gehen besonders gut aus Figuren 3 bis 6 hervor. Demnach erstreckt sich am Außenumfang des Spulensystems 2 entlang diesem ein Platinenstreifen 17, der eine in Figur 6 angedeutete, sich aus Leiterbahnen zusammensetzende elektrische Schaltung 18 trägt. Bei Bedarf kann die elektrische Schaltung auch elektronische Komponenten enthalten. Der Platinenstreifen 17 erstreckt sich über die gesamte. Länge der Spulenanordnung 9, wobei er zweckmäßigerweise am Außenumfang der Spulenanordnung 9 und somit am Außenumfang jeder Einzelspule 3 anliegt.

Die Einzelspulen 3 sind untereinander identisch ausgebildet und können Standardspulen sein, wie sie im Stand der Technik verfügbar sind. In Abhängigkeit von der elektrischen Ansteuerung kann vorgesehen sein, dass die verschiedenen Einzelspulen 3 teilweise mit einander entgegengesetzten Wicklungsrichtungen ausgestattet sind. Vorzugsweise ist jedoch die Wickelrichtung der Einzelspulen 3 untereinander immer gleich, wobei durch die Verschaltung auf dem Platinenstreifen 17 bei Bedarf ein Stromfluß in die andere Richtung erzeugt werden kann.

Jede Einzelspule 3 besteht aus einem gewickelten Spulendraht, wobei die Wicklung so gewählt ist, dass die beiden Drahtenden 22a, 22b (Figur 6) etwa im gleichen Umfangsbereich der Einzelspule 3 platziert sind. Sie ragen dort etwa radial nach außen, wobei sie über den eigentlichen Spulenkörper 23 vorstehen.

An dem Platinenstreifen 17 sind, in einem vorbestimmten Verteilungsmuster in seiner Längsrichtung verteilt, zu der elektrischen Schaltung 18 gehörende Kontaktierungsstellen 24 vorgesehen. Beim Ausführungsbeispiel sind die Kontaktierungsstellen 24 von Kontaktierungslöchern 24a gebildet, die den Platinenkörper quer zu seiner Hauptausdehnungsebene durchsetzen. Ihre Wandung ist zweckmäßigerweise metallisiert.

Die Kontaktierungslöcher 24a sind einander paarweise zugeordnet, wobei in ein jeweiliges Kontaktlöcherpaar 24 die beiden Drahtenden 22a, 22b einer Einzelspule 3 eingesteckt sind. Durch Verlöten sind die Drahtenden 22a, 22b mit der Schaltung 18 elektrisch kontaktiert und dabei gleichzeitig mechanisch am Platinenstreifen 17 fixiert.

Um die geschilderte Zuordnung der Einzelspulen 3 zu unterschiedlichen Spulengruppen zu erhalten, sind die Kontaktierungsstellen 24 bzw. Kontaktierungslöcher 24a durch die Leiterbahnen der elektrischen Schaltung 18 in dem erforderlichen Schaltungsmuster untereinander elektrisch verschaltet. Es ist offensichtlich, dass somit durch Verwendung unterschiedlich verschalteter Platinenstreifen 17 beliebige Schaltungsfunktionalitäten in Bezug auf die Einzelspulen 3 realisiert werden können, ohne dass sich dies auf die Kontaktierung und Fixierung der Einzelspulen 3 selbst auswirkt. Es besteht daher eine hohe Flexibilität bei der Herstellung. Da ungeachtet der gewählten Verschaltung stets die gleiche Art von Einzelspulen 3 verwendet werden kann, ergeben sich hohe Synergieeffekte durch mögliche Mehrfachverwendung.

Die Einzelspulen 3 sind vorzugsweise als Backlackspulen ausgebildet.

Für die Ausgestaltung des Platinenstreifens 17 gibt es verschiedene Möglichkeiten. Man kann beispielsweise auf einen starren Platinenkörper zurückgreifen, so dass der Platinenstreifen 17 seinerseits ein starres Bauteil ist. Es kann einen Mehrschichtaufbau besitzen, wobei auf und/oder zwischen den einzelnen Schichten die elektrische Schaltung 18 realisiert wird (Multilayer-Platine). Empfehlenswert ist auch der Einsatz einer Starr-Flex-Platine, die zweckmäßigerweise einen über die gesamte Länge durchgehenden starren Bestandteil hat, an dem die Kontaktierung der Einzelspulen 3 vorgenommen wird, und die wenigstens einen parallel verlaufenden flexiblen Flügel besitzt, der die wesentlichen Bestandteile der elektrischen Schaltung aufweist.

Der Platinenstreifen 17 ist bevorzugt so am Außenumfang des Spulensystems 2 angeordnet, dass seine Hauptausdehnungsebene tangential zum Außenumfang der Spulenanordnung 9 verläuft (Figur 3).

Das am Außenumfang der Spulenanordnung 9 platzierte rohrförmige Rückschlussteil 15 verfügt im Bereich des Platinenstreifens 17 über eine längs verlaufende Aussparung 25, in der sich der Platinenstreifen 17 erstreckt. Bevorzugt ist die Aussparung 25 von einem Längsschlitz des rohrförmigen Körpers 15a gebildet. Der Platinenstreifen 17 wird von der Aussparung 25 aufgenommen, so dass der Innendurchmesser des rohrförmigen Rückschlussteils 15 im übrigen so gewählt werden kann, dass das Rückschlussteil 15 unmittelbar am Außenumfang der Spulenanordnung 9 anliegt. Dadurch werden die Luftspalte auf ein Minimum reduziert.

Der Abstand zwischen unmittelbar benachbarten Einzelspulen 3 beschränkt sich auf den Durchmesser des Spulendrahtes und wird hervorgerufen durch den von radial innen nach radial außen geführten einen Drahtendabschnitt 26.

Die Zwischenräume zwischen dem Rückschlussteil 15, den Einzelspulen 3 und dem Platinenstreifen 17 werden zweckmäßigerweise mit einer Gießmasse 28, beispielsweise ein Kunstharz, ausgefüllt. Dadurch werden die erwähnten Komponenten relativ zueinander ortsfest fixiert.

Um zu verhindern, dass die Gießmasse 28 in den Innenraum der Spulenanordnung 9 eintritt, sitzen die Einzelspulen 3 zweckmäßigerweise auf einem die Spulenanordnung 9 koaxial durchsetzenden, elektrisch nicht leitenden Rohr 27. Das Rohr 27 besteht bevorzugt aus Kunststoffmaterial. Dieses Rohr 27 kann auch zur Zentrierung der Einzelspulen 3 beitragen. In Verbindung mit dem Lineardirektantrieb bildet es zudem die Lauffläche für das Abtriebsteil 8.

Bei der Herstellung des Spulensystems 2 wird zunächst ein Platinenstreifen 17 bereitgestellt, der die gewünschte elektrische Schaltung 18 mit den entsprechenden Kontaktierungsstellen 24 bzw. Kontaktierungslöchern 24a aufweist. Anschließend werden die Einzelspulen 3 mit ihren Drahtenden 22a, 22b in die zugeordneten Kontaktierungslöcher 24a eingesteckt und in deren Bereich mit der Schaltung verlötet. Prinzipiell könnten die Einzelspulen 3 nacheinander eingesteckt und jeweils unmittelbar anschließend verlötet werden. Als rationeller wird jedoch ein Verfahren gesehen, bei dem zunächst die Drahtenden 22a, 22b sämtlicher Einzelspulen 3 in den Platinenstreifen 17 eingesteckt werden, um anschließend, in einem gemeinsamen Lötvorgang an den Platinenstreifen 17 angelötet zu werden.

Das Rohr 27 kann noch vor dem Verlöten zur Zentrierung der Einzelspulen 3 eingesteckt werden.

Nach dem Verlöten wird die aus den Einzelspulen 3 und den Platinenstreifen 17 bestehende Baueinheit, die zweckmäßigerweise selbsttragend,ist, in das Rückschlussteil 15 eingesteckt. Anschließend oder bereits vorher wurde bzw. wird das Rohr 27 in das Spulensystem 2 eingeführt. In einem weiteren Schritt werden die Zwischenräume zwischen den Einzelspulen 3, dem Rohr 27, dem Rückschlussteil 15 und dem in die Aussparung 25 eintauchenden Platinenstreifen 17 mit der Gießmasse 28 ausgegossen.

Das derart vorbereitete Spulensystem 2 kann nun dem eigentlichen Verwendungszweck zugeführt werden, beispielsweise zum Aufbau eines elektrodynamischen Lineardirektantriebes der geschilderten Art.

## Patentansprüche

1. Spulensystem, insbesondere für einen elektrodynamischen Lineardirektantrieb, mit einer Spulenanordnung (9) bestehend aus mehreren koaxial aufeinanderfolgend angeordneten Einzelspulen (3) und mit einem längs der Spulenanordnung (9) verlaufenden Platinenstreifen (17), der eine elektrische Schaltung (18) mit vorgegebenen Kontaktierungsstellen (24) aufweist, mit denen die Drahtenden (22a, 22b) jeder Einzelspule (3) unter gleichzeitiger mechanischer Fixierung am Platinenstreifen (17) kontaktiert sind, **gekennzeichnet durch** ein zu der Spulenanordnung (9) koaxiales Rückschlussteil (15), das eine längs verlaufende Aussparung (25) aufweist, in der sich der Platinenstreifen (17) erstreckt.

2. Spulensystem nach Anspruch 1, **dadurch gekennzeichnet, dass** der Platinenstreifen (17) starr oder zumindest partiell flexibel ausgebildet ist.

3. Spulensystem nach Anspruch 1 oder 2, **dadurch gekennzeichnet, dass** der Platinenstreifen (17) in seiner Längsrichtung aufeinanderfolgende Kontaktierungslöcher (24a) aufweist, die durch Leiterbahnen des Platinenstreifens (17) in einem bestimmten Schaltungsmuster verschaltet sind und in die die Drahtenden (22a, 22b) der Einzelspulen (3) eingesteckt und mit der elektrischen Schaltung (18) verlötet sind.

4. Spulensystem nach einem der Ansprüche 1 bis 3, **dadurch gekennzeichnet, dass** die Schaltung (18) so ausgebildet ist, dass die Einzelspulen (3) zu mehreren Spulengruppen verschaltet sind.

5. Spulensystem nach einem der Ansprüche 1 bis 4, **dadurch gekennzeichnet, dass** der Platinenstreifen (17) am Außenumfang der Spulenanordnung (9) anliegt.

6. Spulensystem nach einem der Ansprüche 1 bis 5, **dadurch gekennzeichnet, dass** das Rückschlussteil (15) ein die Spulenanordnung umschließender rohrförmiger Körper (15a) ist, der zur Bildung der Aussparung (25) längsgeschlitzt ist.

7. Spulensystem nach einem der Ansprüche 1 bis 6, **dadurch gekennzeichnet, dass** die Zwischenräume zwischen dem Rückschlussteil (15), den Einzelspulen (3) und dem Platinenstreifen (17) mit einer Gießmasse (28) ausgefüllt sind.

8. Spulensystem nach einem der Ansprüche 1 bis 7, **dadurch gekennzeichnet, dass** die Einzelspulen (3) Backlackspulen sind.

9. Spulensystem nach einem der Ansprüche 1 bis 8, **dadurch gekennzeichnet, dass** die Einzelspulen (3) auf einem die Spulenanordnung (9) durchsetzenden, elektrisch nicht leitenden Rohr (27) zentriert sind.

10. Spulensystem nach einem der Ansprüche 1 bis 9, **dadurch gekennzeichnet, dass** die Einzelspulen (3) untereinander identisch aufgebaut sind.

11. Spulensystem nach einem der Ansprüche 1 bis 10, **dadurch gekennzeichnet**, das axial benachbarte Einzelspulen (3) einander zumindest partiell berühren.

12. Verfahren zur Herstellung eines Spulensystems (2), insbesondere für einen elektrodynamischen Lineardirektantrieb, das eine Spulenanordnung (9) mit mehreren koaxial aufeinanderfolgend angeordneten Einzelspulen (3) aufweist, wobei vorgefertigte Einzelspulen (3) mit ihren beiden Drahtenden (22a, 22b) unter gleichzeitiger Kontaktierung an einem eine elektrische Schaltung (18) aufweisenden Platinenstreifen (17) so fixiert werden, dass sich der Platinenstreifen (17) längs der Spulenanordnung (9) erstreckt, wobei die nach dem Fixieren aus den Einzelspulen (3) und den Platinenstreifen (17) entstandene Baueinheit in ein zu der Spulenanordnung (9) koaxiales Rückschlussteil (15) mit längs verlaufender Aussparung (25) eingesteckt wird, wobei sich der Platinenstreifen (17) in der Aussparung (25) erstreckt.

13. Elektrodynamischer Lineardirektantrieb, mit einer als Stator (4) ausgebildeten ersten Komponente und einer relativ zu dem Stator (4) linear beweglichen, als Abtriebsteil (8) ausgebildeten zweiten Komponente, wobei eine der Komponenten (4, 8) mit einem gemäß einem der Ansprüche 1 bis 11 aufgebauten und/oder gemäß Anspruch 12 hergestellten Spulensystem (2) und die andere Komponente mit einem ein oder mehrere axial aufeinanderfolgend angeordnete Permanentmagnete (7) enthaltenden Magnetsystem (6) ausgestattet ist.

14. Elektrodynamischer Lineardirektantrieb nach Anspruch 13, **dadurch gekennzeichnet, dass** das Magnetsystem (6) und das Spulensystem (2) einander koaxial umschließen.

## Claims

1. Coil system, in particular for an electrodynamic direct linear drive, comprising a coil arrangement (9) consisting of a plurality of individual coils (3) in a coaxially consecutive arrangement, and further comprising a circuit board strip (17) which extends along the coil arrangement (9) and which has an electric circuit (18) with predetermined contacting points (24) with which the wire ends (22a, 22b) of each individual coil (3) are contacted while at the same time being mechanically located on the circuit board strip (17), **characterised by** a return part (15) which is coaxial with the coil arrangement (9) and has a longitudinal recess (25) in which the circuit board strip (17) extends.

2. Coil system according to claim 1, **characterised in that** the circuit board strip (17) is designed to be rigid or at least partially flexible.

3. Coil system according to claim 1 or 2, **characterised in that** the circuit board strip (17) has contacting holes (24a) which are arranged consecutively in its longitudinal direction, which are interconnected in a specific circuit pattern by conductors of the circuit board strip (17) and into which are inserted the wire ends (22a, 22b) of the individual coils (3) and soldered to the electric circuit (18).

4. Coil system according to any of claims 1 to 3, **characterised in that** the circuit (18) is designed such that the individual coils (3) are interconnected to form several groups of coils.

5. Coil system according to any of claims 1 to 4, **characterised in that** the circuit board strip (17) lies against the outer circumference of the coil arrangement (9).

6. Coil system according to any of claims 1 to 5, **characterised in that** the return part (15) is a tubular body (15a) enclosing the coil arrangement and has a longitudinal slot to form the recess (25).

7. Coil system according to any of claims 1 to 6, **characterised in that** the interstices between the return part (15), the individual coils (3) and the circuit board strip (17) are filled with a potting compound (28).

8. Coil system according to any of claims 1 to 7, **characterised in that** the individual coils (3) are stove-enamelled coils.

9. Coil system according to any of claims 1 to 8, **characterised in that** the individual coils (3) are centred on a tube (9) which passes through the coil arrangement (9) and is not electrically conductive.

10. Coil system according to any of claims 1 to 9, **characterised in that** the individual coils (3) are constructed identical to one another.

11. Coil system according to any of claims 1 to 10, **characterised in that** axially adjacent individual coils (3) at least partially contact one another.

12. Method for producing a coil system (2), in particular for an electrodynamic direct linear drive, comprising a coil arrangement (9) having a plurality of individual coils (3) in a coaxially consecutive arrangement, wherein prefabricated individual coils (3) are attached by their two wire ends (22a, 22b) to a circuit board strip (17) comprising an electric circuit (18) while simultaneously establishing contact in such a way that the circuit board strip (17) extends along the coil arrangement (9), wherein the assembly of individual coils (3) and circuit board strip (17) created by the attachment process is inserted into a return part (15) coaxial with the coil arrangement (9) and having a longitudinal recess (25), the circuit board strip (17) extending in the recess (25).

13. Electrodynamic direct linear drive, comprising a first component designed as a stator (4) and a second component designed as a driven part (8) and capable of linear movement relative to the stator (4), wherein one of the components (4, 8) is equipped with a coil system (2) constructed according to any of claims 1 to 11 and/or produced according to claim 12 and the other component is equipped with a magnet system (6) comprising one or more permanent magnets (7) in a coaxially consecutive arrangement.

14. Electrodynamic direct linear drive according to claim 13, **characterised in that** the magnet system (6) and the coil system (2) enclose one another coaxially.

## Revendications

1. Système de bobines, en particulier pour un moteur direct linéaire électrodynamique, avec un ensemble de bobines (9) se composant de plusieurs bobines individuelles (3) disposées coaxialement les unes à la suite des autres et avec une bande de platine (17) s'étendant le long de l'ensemble de bobines (9), qui présente un circuit électrique (18) avec des points d'établissement de contact prescrits (24), avec lesquels les extrémités de fil (22a, 22b) de chaque bobine individuelle (3) sont en contact par fixation mécanique simultanée sur la bande de platine (17), **caractérisé par** une partie de blindage (15) coaxiale à l'ensemble de bobines (9), qui présente un évidement (25) longitudinal, dans lequel la bande de platine (17) s'étend.

2. Système de bobines selon la revendication 1, **caractérisé en ce que** la bande de platine (17) est réalisée rigide ou au moins en partie flexible.

3. Système de bobines selon la revendication 1 ou 2, **caractérisé en ce que** la bande de platine (17) présente des trous d'établissement de contact (24a) se suivant les uns les autres dans son sens longitudinal qui sont interconnectés par des pistes conductives de la bande de platine (17) dans un modèle de circuit déterminé et dans lesquels les extrémités de fil (22a, 22b) des bobines individuelles (3) sont enfichées et brasées avec le circuit électrique (18).

4. Système de bobines selon l'une quelconque des revendications 1 à 3, **caractérisé en ce que** le circuit (18) est réalisé de sorte que les bobines individuelles (3) soient interconnectées pour former plusieurs groupes de bobines.

5. Système de bobines selon l'une quelconque des revendications 1 à 4, **caractérisé en ce que** la bande de platine (17) repose contre la périphérie extérieure de l'ensemble de bobines (9).

6. Système de bobines selon l'une quelconque des revendications 1 à 5, **caractérisé en ce que** la partie de blindage (15) est un corps (15a) tubulaire entourant l'ensemble de bobines, qui est fendu sur la longueur pour former l'évidement (25).

7. Système de bobines selon l'une quelconque des revendications 1 à 6, **caractérisé en ce que** les espaces intermédiaires entre la partie de blindage (15), les bobines individuelles (3) et la bande de platine (17) sont remplis d'une masse de coulée (28).

8. Système de bobines selon l'une quelconque des revendications 1 à 7, **caractérisé en ce que** les bobines individuelles (3) sont des bobines Backlack.

9. Système de bobines selon l'une quelconque des revendications 1 à 8, **caractérisé en ce que** les bobines individuelles (3) sont centrées sur un tube (27) non électroconducteur, traversant l'ensemble de bobines (9).

10. Système de bobines selon l'une quelconque des revendications 1 à 9, **caractérisé en ce que** les bobines individuelles (3) sont structurées de manière identique entre elles.

11. Système de bobines selon l'une quelconque des revendications 1 à 10, **caractérisé en ce que** des bobines individuelles (3) contigües axialement se touchent au moins en partie.

12. Procédé de fabrication d'un système de bobines (2), en particulier pour un moteur direct linéaire électrodynamique qui présente un ensemble de bobines (9) avec plusieurs bobines individuelles (3) disposées coaxialement les unes à la suite des autres, des bobines individuelles (3) préfabriquées étant fixées avec leurs deux extrémités de fil (22a, 22b) en établissant simultanément le contact sur une bande de platine (17) présentant un circuit électrique (18) de sorte que la bande de platine (17) s'étende le long de l'ensemble de bobines (9), l'unité de construction composée des bobines individuelles (3) et de la bande de platine (17) après la fixation est enfichée dans une partie de blindage (15) coaxiale à l'ensemble de bobines (9) avec un évidement (25) longitudinal, la bande de platine (17) s'étendant dans l'évidement (25).

13. Moteur direct linéaire électrodynamique avec un premier composant réalisé comme un stator (4) et un second composant réalisé comme une partie de sortie (8), mobile linéairement par rapport au stator (4), l'un des composants (4, 8) étant équipé d'un système de bobines (2) constitué selon l'une quelconque des revendications 1 à 11 et/ou fabriqué selon la revendication 12 et l'autre composant étant équipé d'un système magnétique (6) contenant un ou plusieurs aimants permanents (7) disposés axialement les uns à la suite des autres.

14. Moteur direct linéaire électrodynamique selon la revendication 13, **caractérisé en ce que** le système magnétique (6) et le système de bobines (2) s'entourent coaxialement.
